(19) Europäisches Patentamt / European Patent Office / Office européen des brevets

(11) EP 3 737 856 B1

(12) **EUROPÄISCHE PATENTSCHRIFT**

(45) Veröffentlichungstag und Bekanntmachung des Hinweises auf die Patenterteilung:
**20.12.2023 Patentblatt 2023/51**

(21) Anmeldenummer: **19701583.7**

(22) Anmeldetag: **10.01.2019**

(51) Internationale Patentklassifikation (IPC):
**F03D 7/02** (2006.01)     **F03D 7/04** (2006.01)
**F03D 1/06** (2006.01)

(52) Gemeinsame Patentklassifikation (CPC):
**F03D 7/0232; F03D 1/0675; F03D 7/041;**
F05B 2240/3052; F05B 2260/502; F05B 2270/402;
F05B 2270/508; F05B 2270/606; Y02E 10/72

(86) Internationale Anmeldenummer:
**PCT/EP2019/050572**

(87) Internationale Veröffentlichungsnummer:
**WO 2019/138008 (18.07.2019 Gazette 2019/29)**

(54) **WINDENERGIEANLAGE MIT ENDKANTENSTRÖMUNGSKLAPPE**

WIND TURBINE WITH TRAILING EDGE FLAP

ÉOLIENNE COMPRENANT UN VOLET D'ÉCOULEMENT DE BORD DE FUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.01.2018 DE 102018100397**

(43) Veröffentlichungstag der Anmeldung:
**18.11.2020 Patentblatt 2020/47**

(73) Patentinhaber: **Wobben Properties GmbH**
**26607 Aurich (DE)**

(72) Erfinder: **HOFFMANN, Alexander**
**26721 Emden (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
EP-A1- 2 634 419     US-A- 4 565 929
US-A- 5 456 579     US-A- 5 570 859
US-A1- 2010 310 372

EP 3 737 856 B1

**Beschreibung**

Die vorliegende Erfindung betrifft ein Rotorblatt mit einer aerodynamischen Klappe sowie eine Windenergieanlage mit einem Rotor mit einem solchen Rotorblatt.

Bei der aerodynamischen Klappe handelt es sich insbesondere um eine Endkantenströmungsklappe, welche die Luftströmung an der Hinterkante des Rotorblattes beeinflusst. Sie wird deshalb im Folgenden auch als Hinterkantenklappe bezeichnet. Bei der Konstruktion von Rotorblättern für Windenergieanlagen muss unter anderem ein Kompromiss zwischen einem möglichst großen Auftrieb des Rotorblattes, dessen Luftwiderstand und der Stabilität des Rotorblattes gefunden werden. Denn ein Profil eines Rotorblattes, das bei niedrigen Windgeschwindigkeiten einen hohen Auftrieb erzeugt, hat in der Regel einen hohen Luftwiderstand bei höheren Windgeschwindigkeiten. Außerdem muss ein Konstrukteur neben den aerodynamischen Eigenschaften des Rotorblattes auch sicherstellen, dass das Rotorblatt einem Winddruck standhält, der beispielsweise bei Sturm auftritt. Diese Anforderung ist mit dicken Rotorblättern einfacher zu erfüllen als mit schlanken, denn mit einem dicken Profil ist eine vorgegebene Stabilität mit geringerem Materialaufwand zu erzielen als bei einem schlanken Profil. Allerdings sind schlanke Profile in der Regel aerodynamisch sehr viel wirksamer als dicke Profile. Ein anderer Aspekt ist die Wölbung eines Profils. Ein Profil mit einer starken Wölbung erzeugt bei niedrigen Anströmgeschwindigkeiten einen stärkeren Auftrieb als ein schwächer gewölbtes Profil. Die Anströmgeschwindigkeit ist eine vektorielle Addition der Windgeschwindigkeit und der Umfangsgeschwindigkeit, mit der sich eine bestimmte Stelle auf dem Rotorblatt durch die Luftströmung bewegt. Ein hoher Auftrieb ist bei niedrigen Windgeschwindigkeiten wünschenswert, weil normalerweise der Energieertrag einer Windenergieanlage umso höher ist je höher der Auftrieb des Rotorblattes ist. Allerdings hat ein Profil mit einer starken Wölbung bei höheren Anströmgeschwindigkeiten einen größeren Luftwiderstand als ein Rotorblatt mit einer geringeren Wölbung. Über einen längeren Zeitraum betrachtet könnte sich an bestimmten Standorten eine stärkere Profilwölbung auch negativ auf den Energieertrag einer Windenergieanlage auswirken. Aus diesen Gründen wird ein Rotorblatt für den jeweiligen Anwendungsfall unter der Berücksichtigung der oben genannten Designparameter optimiert.

In dem Bestreben, den Ertrag von Windenergieanlagen im Teillastbereich zu steigern, sind bereits Endkantenströmungsklappen eingesetzt worden, deren Ausschlag mittels einer zugeordneten Meßsensorik und der Anlagensteuerung geregelt ist. Bei niedrigen Windgeschwindigkeiten werden die Endkantenströmungsklappen auf der Druckseite des Rotorblattes ausgefahren und auf bei zunehmenden Windgeschwindigkeiten wieder eingefahren. Mit diesen Endkantenklappen wird erreicht, dass auf der einen Seite bei niedrigen Windgeschwindigkeiten im Vergleich zu einem Referenzprofil ohne Hinterkantenklappe ein größerer Auftrieb erzielt wird, aber der Luftwiderstand bei höheren Windgeschwindigkeiten nicht größer ist als bei einem Referenzprofil.

Bei der technischen Realisierung einer Endkantenströmungsklappe, deren Ausschlag aktiv mittels entsprechender Meßsensoren durch die Anlagensteuerung geregelt wird, treten Schwierigkeiten in Bezug auf die Blitzstromtragfähigkeit bzw. einem entsprechenden Überspannungsschutz der für die Regelung der Endkantenströmungsklappe erforderlichen elektrischen Systeme auf. Darüber hinaus ist ein solches aktives Regelungssystem einer Endkantenströmungsklappe auch deshalb kompliziert, weil es in das Sicherheitssystem bzw. Sicherheitskonzept einer Windenergieanlage eingreift. Wegen der großen Sicherheitsrelevanz einer solchen aktiven Klappenregelung ist mit einem hohen Wartungsaufwand für die Klappenverstelleinrichtung und die zugehörige Sensorik zu rechnen.

Rotorblätter mit Endkantenströmungsklappen und benachbarte technologische Lösungen sind beispielsweise aus US 2014/0356181 A1, DE 103 48 060 A1, DE 10 2015 017 127 A1, DE 10 2012 109 171 A1, DE 101 55 014 A1, DE 29 08 761 A1, EP 2 634 419 A1 und FR 2 863 320 A1 bekannt.

US 5,456,579 A beschreibt ein Windturbinenblatt mit einem passiven Regler, um die Stellung einer an dem Rotorblatt angeordneten Klappe als Funktion der Windgeschwindigkeit zu verändern. Zu diesem Zweck ist ein Klappenantrieb zum Verstellen der Klappe vorgesehen. Der Klappenantrieb weist eine Stange auf, die mit einer in Richtung der Blattspitze außenliegenden Schraubenfeder verbunden ist. An dem zur Rotorblattwurzel hin gerichteten Ende der Schraubenfeder ist ein Bleigewicht angeordnet.

US 5,570,859 A zeigt eine Spoilerklappe für ein Windturbinenblatt, das schwenkbar am hinteren Abschnitt des Blatts angeordnet ist. Mit der Spoilerklappe wirkt ein Klappenantrieb zusammen, mittels dem der Luftstrom entlang der Oberfläche des Blatts, insbesondere bei Auftreten einer Überdrehzahl am Rotor, gezielt beeinflusst und der Rotor abgebremst werden kann.

Hiervon ausgehend ist es eine Aufgabe der vorliegenden Erfindung eines oder mehrere der oben genannten Probleme zu adressieren.

Zur Lösung dieser Aufgabe schlägt die vorliegende Erfindung ein Rotorblatt für eine Windenergieanlage mit den Merkmalen von Anspruch 1 vor. Das Rotorblatt weist ein aerodynamisches Profil auf, das sich von einer Blattwurzel bis zu einer Blattspitze erstreckt und das eine Vorderkante und eine Hinterkante aufweist. An dem Rotorblatt ist eine verstellbare aerodynamische Klappe angeordnet, die mit einem Klappenantrieb zwischen einer eingefahrenen und einer ausgefahrenen Stellung verstellbar ist. Der Klappenantrieb umfasst eine passive Regelung, die eine drehzahlabhängige Stellung der Klappe regelt. Die passive Regelung des Klappenantriebes ist wartungsarm und greift nicht in das Sicherheitskonzept einer Windenergieanlage ein.

Besonders vorteilhaft ist es, wenn der Klappenantrieb aus elektrisch nicht leitendem Material, insbesondere Kunststoff hergestellt ist.

Erfindungsgemäß weist der Klappenantrieb als Kraft erzeugende Antriebsquelle einen Fliehkraftkörper und eine Druckfeder als ein elastisches Element auf, das eine elastische Kraft bereitstellt, welche die von dem Fliehkraftkörper erzeugte Fliehkraft bis zu einer vorbestimmten Drehzahl eines Rotors übersteigt, an dem das Rotorblatt angeordnet ist. Durch die Kombination des Fliehkraftkörpers mit dem elastischen Element wird eine rein passive Regelung der Klappe erreicht. Die vorbestimmte Drehzahl kann durch die Auslegung des elastischen Elementes eingestellt werden und zum Beispiel auch Null Umdrehungen betragen.

Zweckmäßigerweise umfasst der Klappenantrieb ein Getriebe, um die von dem Fliehkraftkörper radial nach außen gerichtete Fliehkraft in eine Schwenk- bzw. Drehbewegung der Klappe umzusetzen.

Insbesondere wenn Störfälle auftreten, hat es sich als vorteilhaft erwiesen, wenn das Rotorblatt eine Verriegelung aufweist, mit der die verstellbare Klappe arretierbar ist. Vorzugsweise ist die Klappe in der eingefahrenen Stellung arretierbar. Wenn im Betrieb eine Fehlfunktion der aerodynamischen Klappe festgestellt wird, ist es mit der Verriegelungsvorrichtung möglich, dass ein Servicetechniker als Sofortlösung die Klappe arretiert, sodass sich das Rotorblatt wie ein konventionelles Rotorblatt ohne aerodynamische Klappe verhält. Sinnvollerweise ist eine solche Verriegelung an jedem Rotorblatt einer Windenergieanlage vorgesehen, so dass an allen Rotorblättern die aerodynamischen Klappen arretierbar sind, wodurch für alle Rotorblätter gleiche aerodynamische Eigenschaften erzielt werden können. Die Windenergieanlage kann auf diese Weise sicher weiterbetrieben werden bis eine Reparatur, zum Beispiel im Rahmen einer umfangreicheren Wartung der Windenergieanlage, erfolgt.

Es hat sich als besonders vorteilhaft herausgestellt, die aerodynamische Klappe als Hinterkantenklappe auszubilden.

Mit Vorteil ist die aerodynamische Klappe aus ihrer Ausgangsstellung nur zur Druckseite des aerodynamischen Profils hin verstellbar, vorzugsweise in einem Winkelbereich von 0-15°. Das Ausfahren der Klappe zur Druckseite bewirkt eine Vergrößerung der Wölbung des aerodynamischen Profils, wodurch der von dem Rotorblatt erzeugte Auftrieb vergrößert wird.

In anderen Ausführungen kann die Klappe alternativ oder zusätzlich auch in Richtung der Saugseite hin verstellbar sein.

Die aerodynamische Klappe kann in unterschiedlichen Bauformen verwirklicht sein. Beispielsweise kann die Klappe als Spreizklappe, Wölbklappe, Spaltklappe, Fowlerklappe und Durchströmklappe ausgeführt sein. Die vorliegende Erfindung lässt es zu, dass für einen bestimmten Anwendungsfall jeweils der am besten geeignete Klappentyp eingesetzt wird.

In bestimmten Anwendungsfällen hat es sich als zweckmäßig erwiesen, wenn an dem Rotorblatt mehrere Klappen vorgesehen sind und zwar vorzugsweise drei bis fünf aerodynamische Klappen, die unabhängig voneinander verstellbar sind. Durch eine größere Anzahl von Klappen ist eine größere Flexibilität in Bezug auf die aerodynamischen Eigenschaften des Rotorblattes erzielbar.

Besonders bevorzugt sind die Klappen untereinander bzw. mit dem Rest der Rotorblatthinterkante elastisch verbunden, sodass keine Luftspalte auftreten, wenn die jeweilige Klappe ausgelenkt ist.

Dabei kann es vorteilhaft sein, wenn gleichzeitig unterschiedliche Klappentypen an dem Rotorblatt angeordnet sind.

Mit Vorteil ist die aerodynamische Klappe in einem Bereich an dem Rotorblatt angeordnet, wo die Dicke des Rotorblattes zwischen 50% und 19 % der maximalen Profildicke beträgt.

In der Praxis hat es sich als zweckmäßig erwiesen, wenn die Länge der Klappe in Richtung einer Rotorblattlängsachse zwischen 0,5 und 5 m beträgt.

Eine besonders günstige Wirkung der aerodynamischen Klappe wird dann erzielt, wenn die Klappe in einem nabennahen Bereich, der sich von einer Blattwurzel bis zu einer halben Gesamtlänge des Rotorblattes erstreckt, angeordnet ist. Wegen der Anordnung insbesondere im inneren Blattdrittel und wegen eines relativ kleinen Klappenausschlagwinkels sind die Klappen als nicht schallkritisch zu bewerten. D.h. durch den Einsatz der Klappen entstehen keine zusätzlichen Betriebseinschränkungen, die durch Schallemissionsgrenzen verursacht sind.

Vorteilhafterweise beträgt die Tiefe der Klappe ungefähr zwischen 5-25 % der Profiltiefe des aerodynamischen Profils des Rotorblattes in dem Bereich, wo die Klappe angeordnet ist.

Bei einer Ausführungsform der Erfindung beträgt ein Klappenwinkel zwischen der eingefahrenen und der maximal ausgefahrenen Klappenstellung nicht mehr als 20°. Bei größeren Klappenwinkeln nimmt der Luftwiderstand des Rotorblattes unvorteilhaft stark zu.

Bei einem weiteren Ausführungsbeispiel beträgt ein Klappenwinkel in dem nabennahen inneren Bereich des Rotorblattes zwischen der eingefahrenen und der maximal ausgefahrenen Klappenstellung bis zu 90°. Die Klappe ist in diesem Fall in der Art einer Gurney-Flap wirksam.

Mit Vorteil weist der Rotorblattantrieb zusätzlich ein Dämpfungselement auf. Das Dämpfungselement verhindert, dass sich schnell verändernde und/oder periodische Kräfte, die auf die Klappe einwirken, zu Schwingungen oder Resonanzen der Klappe führen.

Es hat sich als zweckmäßig erwiesen, wenn die Masse des Fliehkraftkörpers zwischen 1 kg und 25 kg beträgt. Die Größe der Masse hängt von dem radialen Abstand vom Drehpunkt des Fliehkraftkörpers ab.

Schließlich schlägt die Erfindung eine Windenergieanlage mit einem Rotor mit einem oder mehreren Rotorblättern gemäß dem ersten Aspekt der Erfindung vor.

Die vorliegende Erfindung wird nachfolgend exemplarisch anhand von Ausführungsbeispielen unter Bezugnahme auf die begleitenden Figuren näher erläutert. Die Figuren sind schematisch und nicht maßstäblich gemeint. In den Figuren sind gleiche oder einander entsprechende Komponenten mit gleichen oder entsprechenden Bezugszeichen bezeichnet. Es zeigen schematisch und exemplarisch:

Figur 1     eine schematische Ansicht einer Windenergieanlage;
Figur 2     ein Rotorblatt der Windenergieanlage aus Figur 1 in einer Draufsicht;
Figur 3     einen Querschnitt durch das Rotorblatt aus Figur 2;
Figur 4     eine schematische Darstellung eines Klappenantriebes;
Figur 5A    eine aerodynamische Kraft, die auf eine Hinterkantenklappe wirkt;
Figur 5B    eine Gesamtkraft, die auf eine Hinterkantenklappe wirkt;
Figur 6     Leistungskennlinien einer Windenergieanlage;
Figur 7A    Induktionsfaktoren eines Rotorblattes ohne Hinterkantenklappe bei unterschiedlichen Windgeschwindigkeiten;
Figur 7B    Leistungsbeiwerte eines Rotorblattes ohne Hinterkantenklappe bei unterschiedlichen Windgeschwindigkeiten;
Figur 8A    Induktionsfaktoren eines Rotorblattes mit Hinterkantenklappe bei unterschiedlichen Windgeschwindigkeiten;
Figur 8B    Leistungsbeiwerte eines Rotorblattes mit Hinterkantenklappe bei unterschiedlichen Windgeschwindigkeiten;
Figur 9     einen Klappenwinkel als Funktion der Rotordrehzahl;
Figur 10    Leistungsbeiwert- und Leistungskennlinien für Rotorblätter mit und ohne Hinterkantenklappe;
Figur 11    einen Klappenwinkel als Funktion der Rotordrehzahl;
Figur 12    einen Querschnitt durch ein nicht zur Erfindung gehörendes Rotorblatt mit Hinterkantenklappe;
Figur 13    einen Klappenwinkel als Funktion der Rotordrehzahl;
Figur 14    einen Verlauf der Schnelllaufzahl über die Windgeschwindigkeit;
Figur 15    einen Klappenwinkel als Funktion der Rotordrehzahl; und
Figur 16    einen Klappenwinkel als Funktion der Rotordrehzahl.

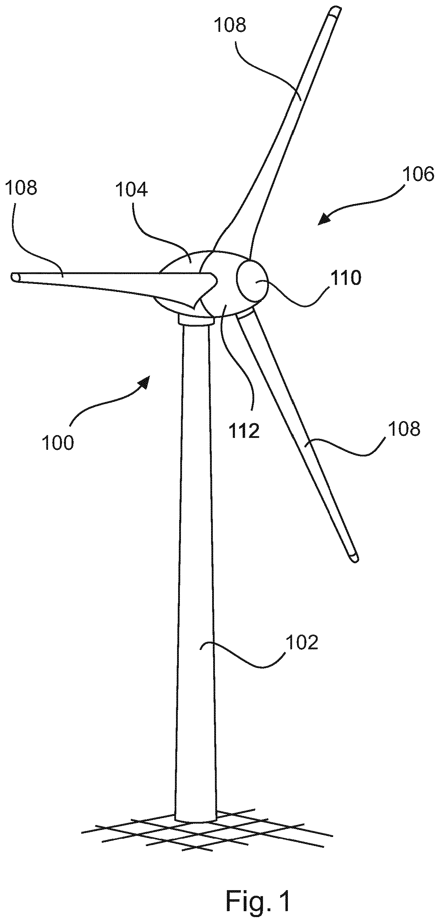

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Die Rotorblätter 108 sind jeweils mit ihrer Blattwurzel an einer Nabe 112 um ihre Längsachse verdrehbar angeordnet, um eine Rotorblattverstellung zu realisieren. Eine Pitchregelung der Windenergieanlage 100 steuert die Rotorblattverstellung so an, dass die Rotorblätter bei geringen Windgeschwindigkeiten bis zu einer Windgeschwindigkeit, bei der die Windenergieanlage ihre Nennleistung erreicht (Nennwindgeschwindigkeit), dem Wind möglichst viel Energie entnehmen. Bei Windgeschwindigkeiten oberhalb der Nennwindgeschwindigkeit werden bei weiter ansteigenden Windgeschwindigkeiten die Rotorblätter zunehmend aus dem Wind gedreht, das heißt der Pitchwinkel der Rotorblätter wird vergrößert, um die Windenergieanlage auf der Nennleistung und Nenndrehzahl zu halten. Bei einem bevorzugten Ausführungsbeispiel werden die Rotorblätter von der Rotorblattverstellung individuell verstellt. Grundsätzlich ist es aber auch möglich, dass für alle drei Rotorblätter 108 stets derselbe Pitchwinkel eingestellt wird.

Im Interesse eines möglichst hohen Ertrages der Windenergieanlage ist es wünschenswert, wenn die Windenergieanlage möglichst schnell ihre Nennleistung erreicht. Erfindungsgemäß sind zu diesem Zweck an den Rotorblättern Hinterkantenklappen vorgesehen, die den Auftrieb der Rotorblätter bei niedrigen Windgeschwindigkeiten erhöhen.

Im Folgenden wird zunächst die Struktur eines erfindungsgemäßen Rotorblattes 108 erläutert und danach dessen aerodynamische Wirksamkeit.

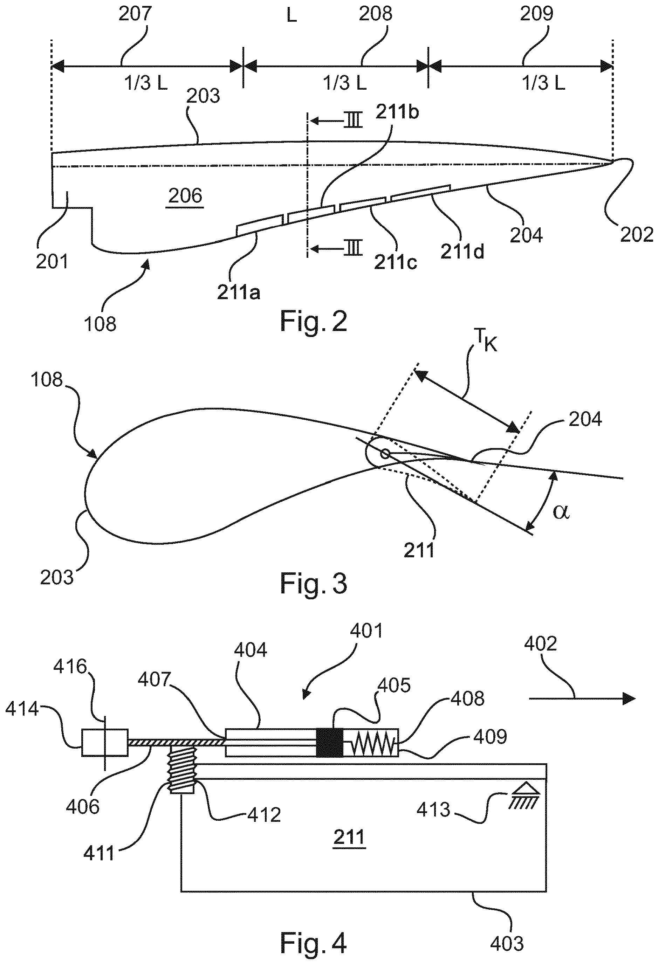

Figur 2 zeigt eine schematische Darstellung einer Draufsicht auf ein einzelnes Rotorblatt 108. Das Rotorblatt 108 erstreckt sich von einer Blattwurzel oder einem Nabenanschlussbereich 201, wo das Rotorblatt 108 mit der Nabe 112 verbunden wird, bis zu einer Blattspitze 202. Das Rotorblatt 108 bildet ein aerodynamisches Profil mit einer Vorderkante 203 und einer Hinterkante 204. Allerdings hat das Rotorblatt 108 im Nabenanschlussbereich 201 in der Regel einen runden Querschnitt, weil es hier in erster Linie auf die Stabilität und weniger auf die aerodynamische Wirkung ankommt. Figur 2 zeigt eine Draufsicht auf die Saugseite 206 des Rotorblattes 108 dessen Gesamtlänge mit L bezeichnet ist. Das Rotorblatt 108 lässt sich grob in einen nabennahen inneren Bereich 207, einen mittleren Bereich 208 und einen äußeren Bereich 209 unterteilen. Letzterer endet an der Blattspitze 202.

Bei dem in Figur 2 gezeigten Ausführungsbeispiel sind an der Hinterkante 204 des Rotorblattes 108 vier Hinterkantenklappen 211a - 211d angeordnet. Wie aus der Darstellung in Figur 2 ersichtlich ist, nimmt die Profiltiefe $T_K$ (Figur 3) der Hinterkantenklappen von der Blattwurzel 201 hin zu der Blattspitze 202 ab. Anders gesagt: Für die Profiltiefen der Hinterkantenklappen 211a-211d gilt $T_K(211a) \geq T_K(211b) \geq T_K(211c) \geq T_K(211d)$, wobei sich die Profiltiefe $T_K(211a)$ auf die Hinterkantenklappe 211a bezieht usw. Die Profiltiefe der Klappen 211a-211d beträgt ungefähr zwischen 5-25 % der Profiltiefe des aerodynamischen Profils des Rotorblattes in dem Bereich, wo die Klappen angeordnet sind. Die Länge der Klappe in Richtung der Rotorblattlängsachse beträgt bei diesem Ausführungsbeispiel ungefähr 4 m. Bei anderen Ausführungsbeispielen kann die Klappenlänge zwischen 0,5 und 5 m betragen. Jede der aerodynamischen Klappen 211a - 211d ist in einem Bereich an dem Rotorblatt angeordnet ist, wo die Dicke des Rotorblattes zwischen 50% und 19 % der maximalen Profildicke beträgt. Bei anderen Ausführungsbeispielen können weniger oder mehr als vier Klappen vorgesehen sein. Eine Rotorblattlängsachse 212 ist als strichpunktierte Linie eingezeichnet. Auch die Ausdehnung der Klappen ist als beispielhaft zu verstehen. Sämtliche Klappen können auch eine konstante Ausdehnung in Profilsehnenrichtung haben, die unabhängig von der lokalen Profiltiefe des Rotorblattes ist.

Die Begriffe "Hinterkantenklappe" und "Klappe" werden in der vorliegenden Beschreibung synonym verwendet, weil ausschließlich Hinterkantenklappen zum Einsatz kommen. Es ist aber auch vorstellbar, die erfindungsgemäße Lehre auf Klappen an der Vorderkante oder andere aerodynamische Anbauteile zu übertragen.

Im Folgenden wird der Kürze halber nur auf eine Klappe 211 Bezug genommen, die beispielhaft für alle Klappen steht, wenn bei einem Ausführungsbeispiel mehrere Klappen vorhanden sind. Mit Bezug auf das in Figur 2 gezeigte Ausführungsbeispiel ist mit der Klappe 211 also eine der Klappen 211a-211d gemeint. Diese Vereinfachung schließt jedoch nicht aus, dass bei Vorhandensein von mehreren Klappen an einem Rotorblatt jede der Klappe mit einem unterschiedlichen Klappenwinkel ausgelenkt wird. Grundsätzlich ist es auch möglich, dass eine oder mehrere entsprechende Klappen an unterschiedlichen Rotorblättern mit voneinander abweichenden Klappenwinkeln ausgelenkt werden, wobei in der Praxis die Abweichungen gering sein dürften.

Figur 3 zeigt einen Querschnitt durch das Rotorblatt 108 entlang der Linie III-III aus Figur 2. In Figur 3 ist das Rotorblatt mit einer eingefahrenen Klappe 211 (Klappe 211b in Figur 2) als durchgezogene Linie dargestellt. Mit einer vollständig eingefahrenen Klappe 211 ist das Profil des Rotorblattes 108 identisch mit dem Profil eines Rotorblattes ohne eine Hinterkantenklappe. Ein Rotorblatt ohne Hinterkantenklappe wird im Folgenden auch als Referenzprofil bezeichnet. Die vollständig ausgefahrene Klappe 211 ist mit gestrichelten Linien gezeigt. Ein Klappenwinkel $\alpha$ gibt an, um wie viel eine ausgefahrene Klappe gegenüber der vollständig eingefahrenen Klappenstellung verschwenkt ist. Die Konvention ist so gewählt, dass $\alpha = 0°$ einer vollständig eingefahrenen Klappe entspricht. Bei dem in Figur 3 dargestellten Ausführungsbeispiel ist die Klappe 211 maximal um einen Winkel $\alpha = 20°$ zur Druckseite des Rotorblattes hin verschwenkbar. Ein negativer Klappenwinkel $\alpha$ bedeutet dementsprechend, dass die Klappe 211 zu der Saugseite des Rotorblattes verschwenkt ist.

Bei einem in der Zeichnung nicht dargestellten Ausführungsbeispiel kann der Klappenwinkel $\alpha$, insbesondere in dem nabennahen inneren Bereich 207, bis zu 90° betragen. Die Klappe wirkt dann wie eine Gurney-Flap, was eine deutliche Reduzierung der Profiltiefe ermöglicht.

Durch die Verschwenkung der Klappe 211 zur Druckseite des Rotorblattes vergrößert sich die Wölbung des aerodynamischen Profils des Rotorblattes 108, was - wie eingangs beschrieben - bei Windgeschwindigkeiten unter der Nennwindgeschwindigkeit einer Windenergieanlage zu einem vergrößerten Auftrieb führt. Anders gesagt: Bei einer konstanten Rotordrehzahl und bei konstanten Windverhältnissen hängt der Auftriebsbeiwert eines Rotorblattprofils von der Profilwölbung des Rotorblattes ab. Je stärker das Rotorblatt gewölbt ist, desto größer ist der Auftriebsbeiwert, was wiederum bewirkt, dass der Rotor ein größeres Drehmoment an den Generator abgeben kann und somit der Ertrag der Windenergieanlage steigt.

Bei anderen Ausführungsbeispielen ist der maximale Klappenwinkel $\alpha$ kleiner gewählt, zum Beispiel $\alpha = 5°$. Allgemein gilt, dass der Klappenwinkel $\alpha$ an das jeweilige Profil des Rotorblattes 108 angepasst wird, das seinerseits auf den Anwendungsbereich der Windenergieanlage angepasst ist. Konkret bedeutet das, dass für Schwachwindstandorte in der Regel ein anderes Profil für die Rotorblätter gewählt wird als für Starkwindstandorte.

Wie aus Figur 3 ersichtlich ist, handelt es sich bei der Klappe 211 um eine Wölbklappe. Die Erfindung ist jedoch unabhängig von der Art der verwendeten Klappe, sodass die dargestellte Wölbklappe 211 nur als Beispiel dargestellt ist. In anderen Ausführungsformen der Erfindung ist die Klappe als beispielsweise als Spreizklappe, Spaltklappe, Fowlerklappe und Durchströmklappe ausgebildet.

Figur 4 zeigt eine schematische Darstellung von einem Antrieb 401 für die passive Regelung der Klappe 211. Die Einbaulage des Antriebes 401 ist so, dass der Pfeil 402 zur Rotorblattspitze 202 zeigt und die Klappenkante 403 im eingefahrenen Zustand der Klappe 211 die Hinterkante 204 des Rotorblattes 108 bildet. In einem einseitig geschlossenen Führungsrohr 404 ist ein Fliehkraftkörper 405 in Längsrichtung des Führungsrohres verschieblich angeordnet. Je nach Ausführungsbeispiel hat der Fliehkraftkörper 405 eine Masse von 1 kg bis 25 kg, was unter anderem von der Geometrie, der Materialdichte und der radialen Position des Fliehkraftkörpers 405 am Rotorblatt abhängt. Das Führungstor 404 ist im Wesentlichen parallel zur Längsachse des Rotorblattes 108 angeordnet, die sich von der Blattwurzel 201 bis zur Blattspitze 202 erstreckt. Auf der der Blattwurzel 201 zugewandten Seite ist der Fliehkraftkörper 405 fest mit einer Drillstange 406 verbunden, die durch ein offenes Ende 407 des Führungsrohres 404 ragt. Auf der der Blattspitze 202 zugewandten Seite des Fliehkraftkörpers 405 ist in dem Führungsrohr 404 eine Druckfeder 408 angeordnet, die auf ihrer einen Seite an dem Fliehkraftkörper 405 und auf ihrer anderen Seite an einem geschlossenen Ende 409 des Führungsrohres 404 anliegt. Die Drillstange 406 kämmt mit einem Ritzel 411. Im Bereich des Ritzels 411 ist die Klappe 211a in einem festen Lager 412 und an der gegenüberliegenden Seite der Klappe 211a in einem Loslager 413 an dem Rotorblatt 108 drehbar gelagert.

Im Interesse eines optimalen Blitzschutzes sind sämtliche Komponenten der Klappe und des Antriebes 401 aus elektrisch nichtleitendem Material, insbesondere Kunststoff, gefertigt. Infrage kommen hierfür faserverstärkte Kunststoffe, insbesondere glasfaserverstärkte Kunststoffe.

Die Drillstange 406 kämmt mit dem Ritzel 411 derart, dass eine Hin- und Herbewegung der Drillstange 406 eine Schwenkbewegung des Ritzel 411 und damit der Klappe 211a bewirkt. Wenn sich der Rotor der Windenergieanlage nicht dreht, ist die Federkraft der Druckfeder 408 so groß, dass die Klappe 211 eine vollständig ausgefahrene Stellung einnimmt, d.h. dass der Klappenwinkel $\alpha$ maximal ist. Bei der in Figur 4 gezeigten Darstellung ist die vollständig ausgefahrene Klappe 211 in der Zeichenebene nach unten verschwenkt. Wenn der

Rotor der Windenergieanlage in Drehung versetzt wird, wirkt auf den Fliehkraftkörper 405 eine Fliehkraft in Richtung des Pfeiles 402 gemäß der Formel

$$F_z = m\omega^2 r \; ,$$

wobei m die Masse des Fliehkraftkörpers, $\omega$ die Winkelgeschwindigkeit und r der Abstand des Fliehkraftkörpers von dem Drehpunkt des Rotors ist.

Die Federkraft der Druckfeder 408 ist so gewählt, dass erst bei Überschreiten einer Grenzdrehzahl $n_{gr}$ von ungefähr 4 Umdrehungen/min die von dem Fliehkraftkörper 405 erzeugte Fliehkraft die Federkraft übersteigt. Dadurch verstellt sich die Klappe 211 allmählich aus der ausgefahrenen Stellung in die eingefahrene Stellung. Dabei wird die Druckfeder 408 komprimiert, was zu einem Anstieg der Federkraft führt bis sich wieder ein Gleichgewicht zwischen Federkraft und Fliehkraft einstellt. Auf diese Weise wird eine passive Regelung der Klappenstellung als Funktion der Drehzahl ohne Verwendung von Sensoren oder Aktoren erreicht. Spätestens wenn die Windenergieanlage die Nenndrehzahl erreicht, ist die Klappe 211 vollständig eingefahren.

Bei anderen Ausführungsbeispielen ist die Druckfeder 408 beispielsweise durch eine Gasfeder ersetzt. Grundsätzlich kommt es für die Ausführung der Erfindung nicht darauf an, mit welchem Mittel eine Gegenkraft erzeugt wird, die der von dem Fliehkraftkörper 405 erzeugten Fliehkraft entgegen gerichtet ist.

Die von der auf die Klappe 211 wirkende Schwerkraft führt während des Umlaufes des Rotors zu Schwankungen von der auf die Klappe 211 ausgeübten Kräfte. Um Schwingungs- bzw. Resonanzeffekte zu verhindern, ist bei einem Ausführungsbeispiel der Erfindung zusätzlich ein Dämpfungselement 414 vorgesehen. Das Dämpfungselement 414 ist mit der Drillstange 406 mechanisch gekoppelt und wirkt ähnlich wie ein Stoßdämpfer in einem Fahrzeug. Bei einer schnellen Bewegung der Drillstange 406 erzeugt das Dämpfungselement 414 eine große Gegenkraft, während bei langsamen Bewegungen eine wesentlich kleinere Gegenkraft entgegen gerichtet ist. Auf diese Weise wird erreicht, dass durch Turbulenzen verursachte schnell veränderliche aerodynamische Kräfte sowie ein umlaufperiodischer Wechsel der auf die Klappe wirkenden Schwerkraft nicht zu einer Verstellung der Klappe 211 führen. Im Ergebnis stellt sich bei jeder Drehzahl n > $n_{gr}$ ein stabiler Klappenwinkel zwischen $\alpha = 0°$ und dem maximalen Klappenwinkel ein.

Darüber hinaus ist das Dämpfungselement 414 mit einem Verriegelungsmechanismus 416 versehen, der es gestattet, die Drillstange 406 zu arretieren. Das kann je nach Ausgestaltung des Verriegelungsmechanismus 416 an einer oder mehrerer vorbestimmter Positionen sowie an beliebigen Positionen erfolgen. Vorzugsweise ist die Drillstange 406 an einer Position arretierbar, die einer vollständig eingefahrenen Klappe entspricht. Auf diese Weise ist es möglich, die Windenergieanlage auch mit einem defekten Klappenantrieb 401 sicher weiter zu betreiben bis eine Reparatur möglich ist.

Bei einem konkreten Ausführungsbeispiel ist der Klappenwinkel $\alpha = 0°$, wenn die Windenergieanlage ihre Nenndrehzahl erreicht. Der Klappenwinkel $\alpha$ bleibt auch bei Drehzahlen oberhalb der Nenndrehzahl $\alpha = 0°$. Erst wenn die Drehzahl des Rotors wieder unter die Grenzdrehzahl Nenndrehzahl fällt, wird die Klappe 211a allmählich wieder ausgefahren und der Klappenwinkel $\alpha$ nimmt Werte von $\alpha > 0°$ an.

Der Antrieb 401 wird als passiv bezeichnet, weil keine wie auch immer geartete Sensorik mit entsprechenden zugeordneten Aktuatoren die Auslenkung der Klappe 211 bewirkt. Vielmehr wird die Auslenkung der Klappe 211 alleine durch das Zusammenwirken des Fliehkraftkörpers 405 und Feder 408 geregelt.

Der Antrieb 401 und die Klappe 211 sind als Baugruppe ausgebildet, die als Ganzes in einem Rotorblatt 108 montierbar ist. Falls ein Defekt an der Hinterkantenklappe 211 oder an dem Antrieb 401 auftritt, ist es möglich, eine Reparatur durch einfachen Austausch der Baugruppe durchzuführen. Auf diese Weise wird insbesondere vermieden, dass ein Rotorblatt für eine Reparatur vom Rotor 106 demontiert werden muss.

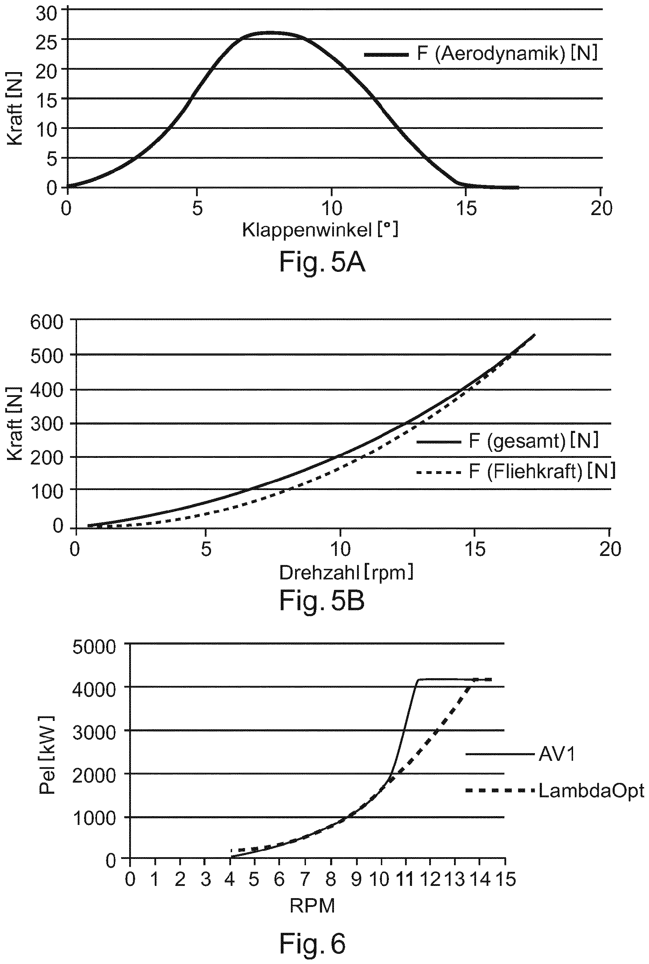

Auf die Klappe 211 wirken neben der Fliehkraft auch aerodynamische Kräfte ein, die von der Größe des Klappenwinkels $\alpha$ abhängen. Figur 5A zeigt den Verlauf der aerodynamischen Kraft, die bei einer bestimmten Windgeschwindigkeit und einem bestimmten Anstellwinkel auf die Klappe 211 ausgeübt wird, als Funktion des Klappenwinkels $\alpha$. Bei dem dargestellten Beispiel beträgt der maximale Klappenwinkel $\alpha$ = 15°. Wie aus Figur 5A ersichtlich ist, verschwindet die aerodynamische Kraft bei vollständig eingefahrener und vollständig ausgefahrener Klappe 211. Dazwischen folgt die aerodynamische Kraft ungefähr einer Glockenkurve, deren Maximum ungefähr bei $\alpha$ = 8° liegt. Die aerodynamische Kraft ist so gerichtet, dass sie die Klappe 211 in Richtung des eingefahrenen Zustands antreibt. Diese zusätzliche aerodynamische Kraft ist bei der Auslegung des Antriebes 401 zu berücksichtigen.

Figur 5B zeigt als durchgezogene Linie die Gesamtkraft, die sich aus der von der Klappe 211 erzeugten aerodynamischen Kraft sowie der von dem Fliehkraftkörper 405 erzeugten Fliehkraft zusammensetzt, als Funktion der Drehzahl des Rotors. Die von dem Fliehkraftkörper 405 erzeugte Fliehkraft ist als gestrichelte Linie dargestellt. Die Gesamtkraft ist in einem Drehzahlbereich zwischen ungefähr 4 Umdrehungen/min bis 14 Umdrehungen/min gegenüber der reinen Fliehkraft vergrößert, was auf die von der Klappe erzeugte aerodynamische Kraft zurückzuführen ist. Bei Drehzahlen unterhalb von ungefähr 4 Umdrehungen/min ist die Gesamtkraft ungefähr gleich groß wie die Fliehkraft, weil die aerodynamische Kraft bei vollständig ausgefahrener Klappe 211 verschwindet. Bei dem betrachteten Ausführungsbeispiel ist bei einer vollständig ausgefahrenen Klappe der Klappenwinkel $\alpha$ = 15°. Bei dem Klappenwinkel $\alpha$ = 15° verschwindet die aerodynamische Kraft, wie in Figur 5A gezeigt ist. Gleiches gilt für Drehzahlen oberhalb von ungefähr 14 Umdrehungen/min, wo die Klappe vollständig eingefahren ist und dementsprechend keine aerodynamische Kraft von der Klappe erzeugt wird wie ebenfalls aus Figur 5A ersichtlich ist. Deshalb stimmt bei niedrigen und hohen Drehzahlen die Gesamtkraft mit der Fliehkraft überein.

Der in Figur 4 dargestellte Antrieb der Hinterkantenklappe ist nur ein Ausführungsbeispiel. Tatsächlich ist die vorliegende Erfindung unabhängig davon, auf welche konkrete Weise die von dem Fliehkraftkörper 405 erzeugte Fliehkraft auf eine Hinterkantenklappe übertragen wird. Beispielsweise ist bei einem anderen Ausführungsbeispiel ein Hebelgetriebe vorgesehen oder ein Seilzug, insbesondere unter Verwendung eines Flaschenzuges. Im Prinzip ist jede Art von Getriebe einsetzbar, das geeignet ist die longitudinale Bewegung des Fliehkraftkörpers 405 in eine Schwenkbewegung für die Klappe umzusetzen.

Die eingangs beschriebene allgemeine Wirkung einer Hinterkantenklappe bei einem Rotorblatt wird nun im Folgenden mit Bezug auf Anlagenkennlinien konkreter erläutert.

Figur 6 zeigt zwei Betriebskennlinien für eine Windenergieanlage. Bei der als "LambdaOpt" (optimale Schnelllaufzahl $\lambda$) gekennzeichneten ersten Betriebskennlinie, die als gestrichelte Linie dargestellt ist, wird die Rotordrehzahl der Windenergieanlage so geregelt wird, dass der Rotor möglichst mit der optimalen Schnelllaufzahl $\lambda$ rotiert. Die Schnelllaufzahl gibt das Verhältnis aus Blattspitzengeschwindigkeit und Windgeschwindigkeit an. Als zweite mit "AV1" bezeichnete Betriebskennlinie ist als durchgezogene Linie ein Praxisbeispiel gezeigt, bei dem ab einer Rotordrehzahl von 10 Umdrehungen/min von der optimalen Schnelllaufzahl abgewichen wird. Wie aus Figur 6 ersichtlich ist, wird mit der Betriebskennlinie "AV1" die Nennleistung der Windenergieanlage bereits bei ungefähr 11 Umdrehungen/min erreicht, während gemäß der Betriebskennlinie "LamdbaOpt" die Nennleistung erst bei ungefähr 13 Umdrehungen/min erzielt wird.

Die Abweichung von der optimalen Schnelllaufzahl hat einen Einfluss auf die Induktionsfaktoren des Rotorblattes. Idealerweise wird ein Rotorblatt so ausgelegt, dass die Induktionsfaktoren, die die Verzögerung der Luftströmung in der Rotorebene beschreiben, ungefähr 1/3 betragen. Wenn die Induktionsfaktoren unter diesen Wert sinken, dann sinken auch die Leistungsbeiwerte der Windenergieanlage. Der Leistungsbeiwert beschreibt das Verhältnis zwischen der von der Windenergieanlage produzierten Energie im Verhältnis zu der in dem Wind enthaltenen Primärenergie. Der theoretische Maximalwert für den Leistungsbeiwert cp beträgt 0,59.

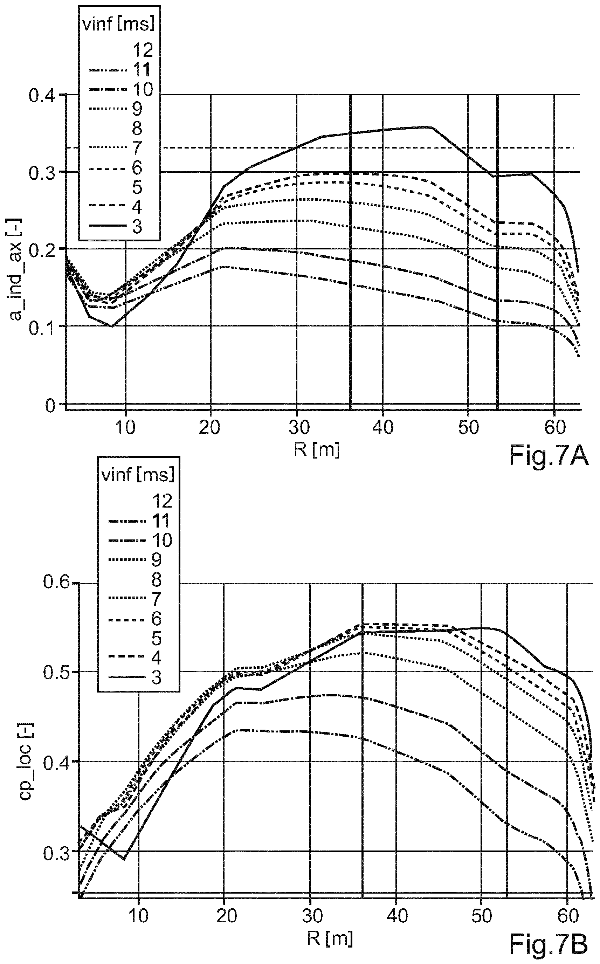

Figur 7A zeigt die Induktionsfaktoren für ein Rotorblatt mit einer Länge von 63 m. Die Induktionsfaktoren sind auf der y-Achse als Funktion des Abstandes von dem Drehpunkt des Rotors aufgetragen. Der Abstand von dem Drehpunkt des Rotors ist auf der x-Achse aufgetragen, wobei x = 0 der Position des Drehpunktes des Rotors entspricht, während sich die Rotorblattspitze in dem Diagramm ganz rechts befindet. In diesem Diagramm sind die Induktionsfaktoren für unterschiedliche Windgeschwindigkeiten in mehreren Kurven aufgetragen. Es ist deutlich erkennbar, dass die Induktionsfaktoren ab Windgeschwindigkeiten über 5 m/s deutlich von dem optimalen Wert von 1/3 abweichen. Hierbei ist zu berücksichtigen, dass ab Windgeschwindigkeiten von ungefähr 11 m/s das Rotorblatt ohnehin aus dem Wind gedreht wird, weil die Windenergieanlage bereits ihre Nennleistung erreicht hat. Bei hohen Windgeschwindigkeiten sind daher absinkende Induktionsfaktoren nicht weiter beachtlich, weil sie den Energieertrag der Windenergieanlage normalerweise nicht beeinflussen. Umgekehrt sind bei niedrigen bis mittleren Windgeschwindigkeiten Induktionsfaktoren, die nahe bei dem Optimum liegen, günstig, weil sie sich unmittelbar positiv auf die Energieausbeute auswirken.

Dieser Zusammenhang ist in Figur 7B dargestellt, wo die mit den Induktionsfaktoren korrespondierenden Leistungsbeiwerte desselben Rotorblattes dargestellt sind. Die Leistungsbeiwerte sinken im Gleichlauf mit den Induktionsfaktoren bei mittleren Windgeschwindigkeiten von 6-9 m/s ab, insbesondere in einem Bereich des Rotorblattes mit einem Abstand von 36-53 m von dem Drehpunkt des Rotors. Das Absinken der Leistungsbeiwerte bei hohen Windgeschwindigkeiten von 10-12 m/s ist wiederum ohne praktische Bedeutung, weil die Windenergieanlage bei diesen Windgeschwindigkeiten bereits ihre Nennleistung erreicht hat, sodass niedrigere Leistungsbeiwerte keinen Einfluss auf den Energieertrag der Windenergieanlage haben.

Erfindungsgemäß wird das Absinken der Induktionsfaktoren bzw. der Leistungsbeiwerte durch den Einsatz einer Hinterkantenklappe zumindest teilweise kompensiert. Zur Veranschaulichung wird ein Ausführungsbeispiel betrachtet, bei dem in einem Bereich zwischen 36 m und 53 m Abstand von der Nabe eine Hinterkantenklappe an einem Rotorblatt angeordnet ist, die zum Beispiel um 20° zur Druckseite hin ausgelenkt ist.

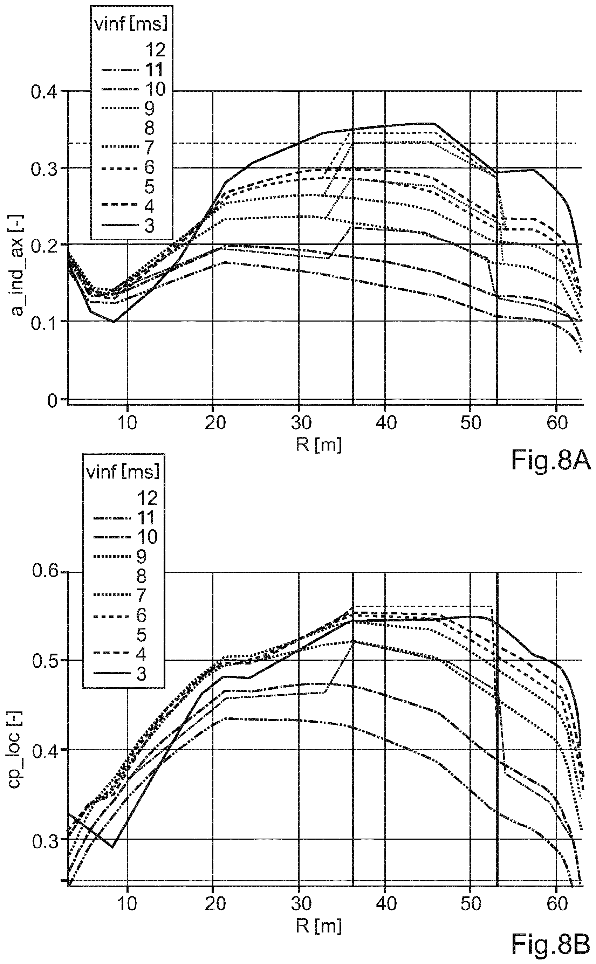

Figur 8A zeigt ganz entsprechend zu Figur 7A die Induktionsfaktoren als Funktion des Abstandes von dem Drehpunkt eines Rotors, der mit Rotorblättern mit Hinterkantenklappen ausgestattet ist. Die Hinterkantenklappen sind an den Rotorblättern in einem Abstand von 36 m bis 53 m vom Drehpunkt des Rotors angeordnet. Die Induktionsfaktoren sind in dem Diagramm für unterschiedliche Windstärken als getrennte Kurven aufgetragen. Für mittlere Windstärken im Bereich von 6-9 m/s sind die Induktionsfaktoren in dem Bereich auf dem Rotorblatt 108 von 36 m bis 53 m, wo die Hinterkantenklappen wirksam sind, deutlich gegenüber einem Referenzprofil ohne Hinterkantenklappe erhöht.

In Figur 8B sind die zu den in Figur 8A gezeigten Induktionsfaktoren korrespondierenden Leistungsbeiwerte cp aufgetragen, die durch den Anstieg der Induktionsfaktoren ebenfalls im Vergleich zu einem Referenzprofil ohne Hinterkantenklappe erhöht sind. Das gilt insbesondere für den Bereich von 36-53 m, wo die Hinterkantenklappen wirksam sind.

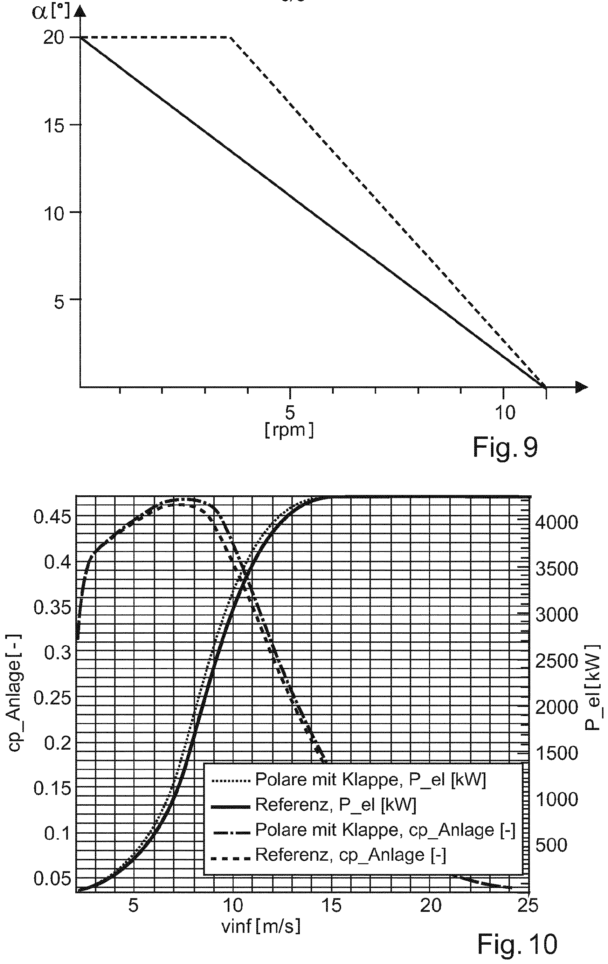

Figur 9 zeigt als durchgezogene Linie einen Verlauf des Klappenwinkels $\alpha$ als Funktion der Drehzahl des Rotors. Der Klappenwinkel wird ausgehend von einem Klappenwinkel von $\alpha$ = 20° bei stillstehendem Rotor kontinuierlich auf einen Wert von $\alpha$ = 0° bei 11 Umdrehungen/min verstellt. Der Wert von $\alpha$ = 20° markiert hierbei eine maximal zur Druckseite des Rotorblattes hin ausgefahrene Hinterkantenklappe, während $\alpha$ = 0° einer vollständig eingefahrenen Hinterkantenklappe entspricht. Zwischen dem minimalen und maximalen Wert verändert sich der Klappenwinkel $\alpha$ als Funktion der Drehzahl linear. Dieser Verlauf ist nur beispielhaft gezeigt und bei anderen Ausführungsbeispielen kann es vorgesehen sein, dass die Hinterkantenklappe bis zu einer Grenzdrehzahl vollständig ausgefahren bleibt und erst bei Drehzahlen oberhalb der Grenzdrehzahl eingefahren wird. In Figur 9 ist als zweites Beispiel dieser Fall als gestrichelte Linie dargestellt, wobei als Grenzdrehzahl in diesem Fall 4 Umdrehungen/min gewählt sind. In anderen Ausführungsbeispielen kann die Grenzdrehzahl kleiner oder größer als 4 Umdrehungen/min sein.

Figur 10 zeigt einen Verlauf der Leistungsbeiwerte eines Rotorblattes ohne Hinterkantenklappe (Referenzprofil) im Vergleich zu einem Rotorblatt mit Hinterkantenklappe als Funktion der Windgeschwindigkeit. Die Leistungsbeiwerte sind auf der linken Koordinate aufgetragen, die Windgeschwindigkeit auf der Abszisse. Im Vergleich ist erkennbar, dass der Leistungsbeiwert des Rotorblattes mit Hinterkantenklappen im Bereich von Windgeschwindigkeiten zwischen 7 und 13 m/s gegenüber dem Leistungsbeiwert eines Rotorblattes ohne Hinterkantenklappen erhöht ist. Gleiches gilt für die elektrische LeistungsKennlinie, die in dem Diagramm auf der rechten Ordinate aufgetragen ist. Eine Windenergieanlage mit Rotorblättern, die mit Hinterkantenklappen ausgerüstet ist, erzielt bei den genannten mittleren Windgeschwindigkeiten zwischen 7-13 m/s eine höhere Leistung.

In Tab. 1 werden für eine Reihe von mittleren Windgeschwindigkeiten ein Differenzwert für den jährlichen Energieertrag zwischen einer Windenergieanlage mit Rotorblättern, die mit einer Hinterkantenklappe ausgerüstet sind (AEP(flap)), und einer Windenergieanlage ohne Hinterkantenklappen (AEP(ref)) gegenübergestellt. Der Differenzwert für den jährlichen Energieertrag ΔAEP ("annual energy production") wird wie folgt berechnet

$$\Delta\text{AEP} = \frac{AEP(flap) - AEP(ref)}{AEP(ref)}$$

Dabei ergeben sich folgende Werte:

Tab. 1

| mittlere Windgeschwindigkeit (m/s) | ΔAEP (%) |
|---|---|
| 5,5 | 1,64 |
| 6,6 | 1,68 |
| 7,5 | 1,57 |
| 8,5 | 1,41 |

Bei einem konkreten Ausführungsbeispiel ist der jährliche Energieertrag einer Windenergieanlage mit Rotorblättern, die mit einer Hinterkantenklappe ausgerüstet sind, ungefähr 1-2 % höher, als bei einer Windenergieanlage mit Referenzprofil ohne Hinterkantenklappe.

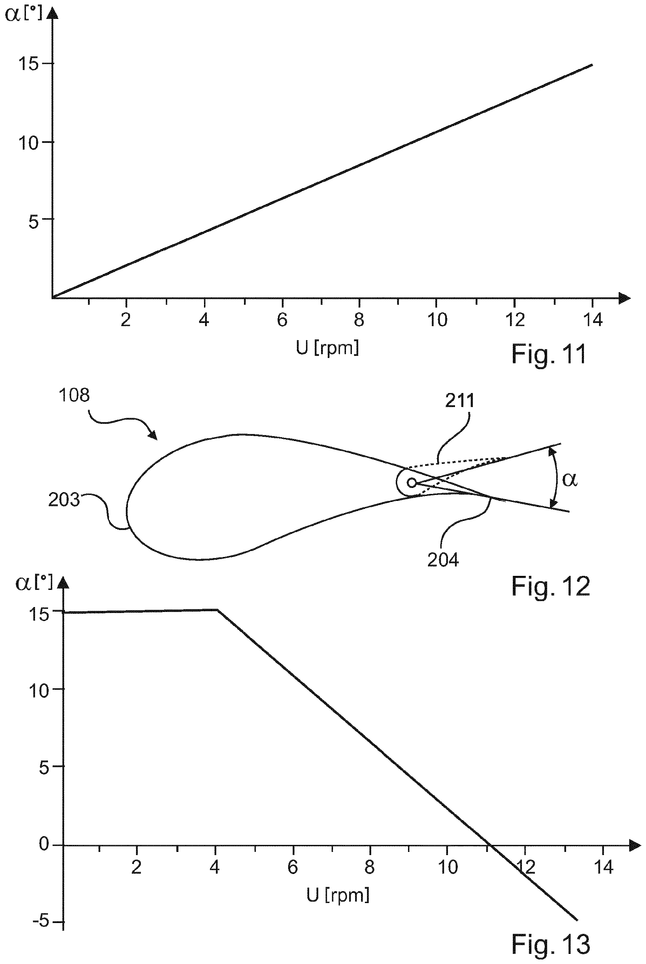

Bei einem nicht zur Erfindung zählenden Ausführungsbeispiel wird die Hinterkantenklappe genau umgekehrt verstellt wie bei den bisher beschriebenen Ausführungsbeispielen und zwar ist die Hinterkantenklappe bei niedrigen Drehzahlen vollständig eingefahren und wird mit ansteigenden Drehzahlen ausgefahren. Dieses Verhalten der Hinterkantenklappe wird in dem Diagramm in Figur 11 veranschaulicht. Figur 11 zeigt, dass der Klappenwinkel als Funktion der Drehzahl zunimmt. In einem konkreten Ausführungsbeispiel ist der Klappenwinkel bei 0 Umdrehungen pro Minute $\alpha = 0°$, während er bei 14 Umdrehungen/min einen Maximalwert von $\alpha = 15°$ erreicht.

Obwohl der Einfluss der Hinterkantenklappe stets von dem Gesamtprofil des Rotorblattes abhängt, ist es in den meisten Fällen so, dass sich das aerodynamische Verhalten verschlechtert, wenn der Klappenwinkel als Funktion der Drehzahl zunimmt. Dieses Verhalten lässt sich jedoch beispielsweise bei einer Windenergieanlage für Schwachwindstandorte ausnutzen, deren Rotorblätter für niedrige Windgeschwindigkeiten optimiert sind. Um die Belastung auf die Rotorblätter bei hohen Windgeschwindigkeiten zu reduzieren, wird eine Hinterkantenklappe bei höheren Drehzahlen in Richtung Saugseite ausgefahren, was die aerodynamischen Eigenschaften des Rotorblattes der Rotorblätter verschlechtert, um deren Belastung zu reduzieren. Die Belastung auf die Rotorblätter wird dabei unabhängig von dem eingestellten Pitchwinkel reduziert. Die Rotorblätter können deshalb für niedrigere Belastungen ausgelegt werden, was Material und Kosten spart.

Dieses nicht erfindungemäße Ausführungsbeispiel ist in Figur 12 gezeigt. Die zur Saugseite hin verstellte Klappe 211 ist gestrichelt dargestellt. Entsprechend der gewählten Konvention ist der Klappenwinkel in Figur 12 negativ.

Figur 13 zeigt den Verlauf des Klappenwinkels bei diesem Ausführungsbeispiel als Funktion der Drehzahl. Bei niedrigen Drehzahlen ist die Hinterkantenklappe auf die Druckseite des Rotorblattes bis zum Erreichen einer Grenzdrehzahl von beispielsweise 4 Umdrehungen/min vollständig ausgefahren. Danach nimmt der Klappenwinkel kontinuierlich ab, um bei einer Drehzahl von 11 Umdrehungen/min den Wert $\alpha = 0°$ zu erreichen, was einer vollständig eingefahrenen Hinterkantenklappe entspricht. Wenn die Drehzahl auf über 11 Umdrehungen/min ansteigt, dann wird die Hinterkantenklappe auf die Saugseite des Rotorblattes hin ausgefahren, wie es in Figur 12 dargestellt ist. Dabei verschlechtern sich die aerodynamischen Eigenschaften des Rotorblattes, wodurch die gewünschte Entlastung des Rotorblattes erreicht wird.

Auch bei den alternativen Ausführungsformen wird die Verstellung des Rotorblattes durch eine passive Regelung erreicht, bei der mit einem Fliehkraftkörper die erforderliche Kraft zur Verstellung der Hinterkantenklappe erzeugt wird.

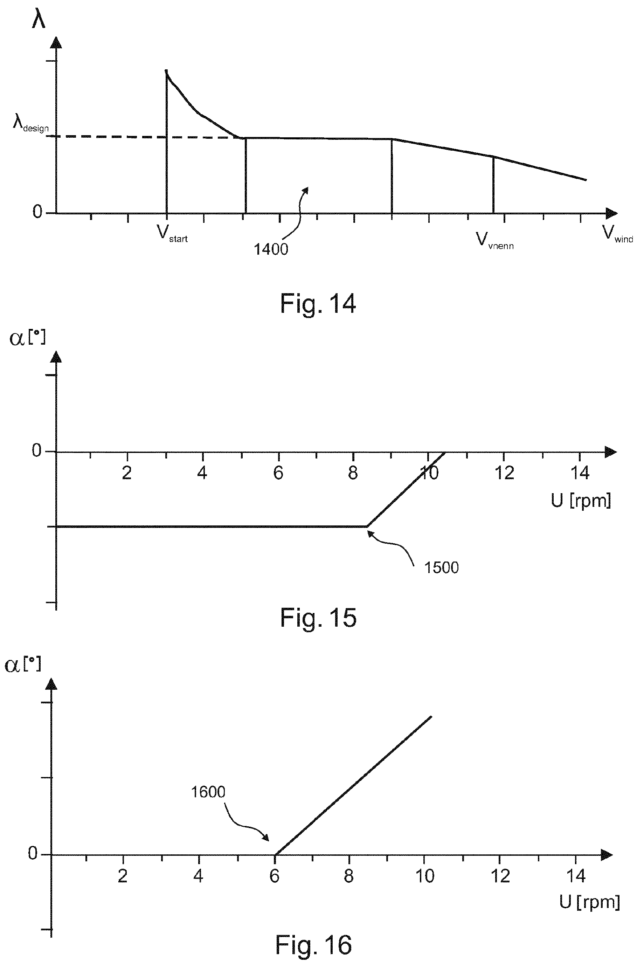

Figur 14 zeigt schematisch und exemplarisch einen Verlauf der Schnelllaufzahl $\lambda$ über die Windgeschwindigkeit $v_{wind}$. Die Schnelllaufzahl $\lambda$ beeinflusst ebenfalls den Induktionsfaktor. Ab einer Startwindgeschwindigkeit $v_{Start}$ wird die Anlage betrieben. In einem Teillastbereich 1400 wird die Anlage mit höheren Windgeschwindigkeiten schneller gedreht, um die Schnelllaufzahl $\lambda$ bei dem optimalen Wert $\lambda_{Design}$ zu halten. Kurz vor der Nennleistung $P_{nenn}$ bei Nennwindgeschwindigkeit $v_{nenn}$ fängt die Anlage an, von der optimalen Schnelllaufzahl $\lambda_{Design}$ abzuweichen, weshalb der Induktionsfaktor typischerweise in diesem Bereich auch absinkt.

Figur 15 zeigt schematisch und exemplarisch eine Kennlinie des Klappenwinkels über die Rotordrehzahl, die diesen Induktionsfaktorabfall im Bereich der Nennleistung adressiert. Bei windstarken Anlagen sind die Induktionfaktoren im Teillastbereich meistens höher als das Betz Optimum, man spricht deshalb von überinduzierten Anlagen. Der Grund ist, dass der Induktionsfaktor bei höheren Windgefälligkeiten optimal gehalten werden soll, da dann, wenn die Anlagen als Starkwindanlagen ausgelegt sind, diese Windgeschwindigkeitsbereiche häufig auftreten.

Weil die Anlage in dem Betriebsbereich kurz von Nennleistung, vergleiche Figur 14, bezogen auf die Windgeschwindigkeit langsamer als im Teillastbereich dreht, ist der Induktionsfaktor in diesem Bereich geringer als im Teillastbereich 1400. Weil die Anlage im Teillastbereich überinduziert ist, weicht die Anlage dort von dem optimalen Leistungsbeiwert (nach oben) ab. Dies ist ebenfalls unerwünscht.

In Figur 15 wird eine Steuerung des Klappenwinkels schematisch und exemplarisch dargestellt, mit der der Auftrieb im Teillastbereich dadurch reduziert werden kann, in dem die Klappen in Richtung der Saugseite aufgeklappt werden. Erst ab einem Schwellwert 1500 für die Rotordrehzahl werden diese Klappen zurück in die 0° Position geregelt, so dass in dem Betriebsbereich für Leistungen nahe Nennwindgeschwindigkeit $v_{nenn}$ wieder der ursprüngliche Designauftrieb generiert wird.

Damit kann in dieser Ausführungsform gewährleistet werden, dass der lokale Induktionsfaktor über den gesamten Betriebsbereich der Windenergieanlage im Bereich des Betz Optimums gehalten wird und so die aerodynamische Leistung des Rotorblattes durch die Vermeidung der Überinduktion im Teillastbereich verbessert wird.

Figur 16 zeigt schematisch und exemplarisch eine weitere Kennlinie des Klappenwinkels über die Rotordrehzahl. Dieses Ausführungsbeispiel eignet sich besonders für Standorte, an denen die Lasten nicht kritisch sind, beispielsweise Standorte mit geringerer Luftdichte.

Die Schnelllaufzahl $\lambda$ beginnt im höheren Teillastbereich, also im Betriebsbereich zwischen Teillastbereich 1400 und Nennleistung, abzusinken, wie mit Verweis auf Figur 14 beschrieben wurde. In diesem Fall kann der Induktionsfaktor durch die Endkantenklappen wieder erhöht werden, indem die Klappen ab einer Rotordrehzahl 1600 in positive Richtung gedreht werden und dadurch zusätzlich Auftrieb erzeugen.

Dieses Vorgehen führt aber auch zu Lasterhöhungen. Die Erhöhung der Lasten ist jedoch geringer als durch eine üblicherweise vollzogene oder notwendige Reduzierung des Blattwinkels, das heißt durch Pitchen der Rotorblätter. Wenn die Endkantenklappen auf einem bestimmten Bereich des Blattes angebracht werden und dadurch nur lokale Induktionsfaktoren beeinflusst werden, wird in Summe eine niedrigere Belastung erreicht. Zusätzlich wird die Gefahr der Strömungsablösung, wie sie durch eine Verringerung des Blatteinstell- bzw. Pitchwinkels erzeugt wird, verringert. In der schematisch gezeigten Figur 16 wird demnach ab der Rotordrehzahl 1600 eine Erhöhung des Klappenwinkels mit steigender Rotordrehzahl umgesetzt.

Bezugszeichenliste

| 100 | Windenergieanlage | 401 | Antrieb Hinterkantenklappe |
|------|---------------------|------|-----------------------------|
| 102 | Turm | 402 | Pfeil (Richtung Blattspitze) |
| 104 | Gondel | 403 | Kante |
| 106 | Rotor | 404 | Führungsrohr |
| 108 | Rotorblätter | 405 | Fliehkraftkörper |
| 110 | Spinner | 406 | Drillstange |
| 112 | Nabe | 407 | offenes Ende |
| | | 408 | Druckfeder |
| 201 | Blattwurzel | 409 | geschlossenes Ende |
| 202 | Blattspitze | | |
| 203 | Vorderkante | 411 | Ritzel |
| 204 | Hinterkante | 412 | Festlager |
| | | 413 | Loslager |
| 206 | Sauseite | 414 | Dämpfungselement |
| 207 | innere Bereich | 416 | Verriegelungsmechanismus |
| 208 | mittlerer Bereich | | |
| 209 | äußerer Bereich | | |
| | | 1400 | Teillastbereich |
| 211a-211d | Klappen | 1500 | Schwellwert |
| 212 | Rotorblattlängsachse | 1600 | Rotordrehzahl |

**Patentansprüche**

1. Rotorblatt für eine Windenergieanlage (100) mit einem aerodynamischen Profil, das sich von einer Blattwurzel (201) bis zu einer Blattspitze (202) erstreckt und das eine Vorderkante (203) und eine Hinterkante (204) aufweist, wobei eine verstellbare aerodynamische Klappe (211, 211a-211d) an dem Rotorblatt angeordnet ist, und wobei die Klappe mit einem Klappenantrieb (401) zwischen einer eingefahrenen und einer ausgefahrenen Stellung verstellbar ist, wobei der Klappenantrieb (401) eine passive Regelung umfasst, die eine drehzahlabhängige Stellung der Klappe regelt,

   wobei der Klappenantrieb (401) als Kraft erzeugende Antriebsquelle einen Fliehkraftkörper (405) und eine Druckfeder als ein elastisches Element (408) aufweist, das eine elastische Kraft bereitstellt, welche die von dem Fliehkraftkörper (405) erzeugte Fliehkraft bis zu einer vorbestimmten Drehzahl eines Rotors (106) übersteigt, an dem das Rotorblatt (108) angeordnet ist, **dadurch gekennzeichnet, dass** der Klappenantrieb (401) so konfiguriert ist, dass, wenn sich der Rotor der Windenergieanlage nicht dreht, die Federkraft der Druckfeder (408) so groß ist, dass die Klappe (211) eine vollständig ausgefahrene Stellung einnimmt und erst bei Überschreiten einer Grenzdrehzahl ($n_{gr}$) von etwa 4 Umdrehungen/min die von dem Fliehkraftkörper (405) erzeugte Fliehkraft die Federkraft übersteigt, sodass der Klappenantrieb die Klappe (211) allmählich aus der ausgefahrenen Stellung in die eingefahrene Stellung verstellt.

2. Rotorblatt nach Anspruch 1, **dadurch gekennzeichnet, dass** der Klappenantrieb aus elektrisch nicht leitendem Kunststoff hergestellt ist.

3. Rotorblatt nach einem der vorstehenden Ansprüche, **dadurch gekennzeichnet, dass** der Klappenantrieb (401) ein Getriebe umfasst.

4. Rotorblatt nach einem der vorstehenden Ansprüche, **dadurch gekennzeichnet, dass** das Rotorblatt eine Verriegelung (416) aufweist, mit der die verstellbare Klappe (211, 211a-211d) arretierbar ist, wobei die Klappe vorzugsweise in der eingefahrenen Stellung arretierbar ist.

5. Rotorblatt nach einem der vorstehenden Ansprüche, **dadurch gekennzeichnet, dass** die aerodynamische Klappe als Hinterkantenklappe (211a-211d) ausgebildet ist.

6. Rotorblatt nach einem der vorstehenden Ansprüche, **dadurch gekennzeichnet, dass** die aerodynamische Klappe aus ihrer Ausgangsstellung nur zur Druckseite des aerodynamischen Profils hin verstellbar ist, vorzugsweise in einem Winkelbereich von 0-15°.

7. Rotorblatt nach einem der vorstehenden Ansprüche, **dadurch gekennzeichnet, dass** die eine aerodynamische Klappe in einer Bauform verwirklicht ist, die aus einer Gruppe von Klappentypen ausgewählt ist bestehend aus: Spreizklappe, Wölbklappe, Spaltklappe, Fowlerklappe und Durchströmklappe.

8. Rotorblatt nach einem der vorstehenden Ansprüche, **dadurch gekennzeichnet, dass** an dem Rotorblatt mehrere Klappen (211a-211d) vorgesehen sind und zwar vorzugsweise drei bis fünf aerodynamische Klappen, die unabhängig voneinander verstellbar sind.

9. Rotorblatt nach Anspruch 7 und 8, **dadurch gekennzeichnet, dass** gleichzeitig unterschiedliche Klappentypen an dem Rotorblatt (108) angeordnet sind.

10. Rotorblatt nach einem der vorstehenden Ansprüche, **dadurch gekennzeichnet, dass** die eine aerodynamische Klappe in einem Bereich an dem Rotorblatt angeordnet ist, wo die Dicke des Rotorblattes zwischen 50% und 19 % der maximalen Profildicke beträgt und/oder die Länge der aerodynamischen Klappe in Richtung einer Rotorblatt Längsachse zwischen 0,5 und 5 m beträgt.

11. Rotorblatt nach einem der vorstehenden Ansprüche, **dadurch gekennzeichnet, dass** die aerodynamische Klappe in einem nabennahen Bereich, der sich von einer Blattwurzel (201) bis zu einer halben Gesamtlänge des Rotorblattes erstreckt, angeordnet ist und/oder die Tiefe der aerodynamischen Klappe zwischen 5-25 % der Profiltiefe des aerodynamischen Profils des Rotorblattes (108) in dem Bereich beträgt, wo die aerodynamische Klappe angeordnet ist.

12. Rotorblatt nach einem der vorstehenden Ansprüche, **dadurch gekennzeichnet, dass** ein Klappenwinkel ($\alpha$) zwischen der eingefahrenen und der maximal ausgefahrenen Klappenstellung nicht mehr als 20° beträgt, oder dass ein Klappenwinkel ($\alpha$) in einem nabennahen inneren Bereich (207) des Rotorblattes, der sich von einer Blattwurzel (201) bis zu einer halben Gesamtlänge des Rotorblattes erstreckt, zwischen der eingefahrenen und der maximal ausgefahrenen Klappenstellung bis zu 90° beträgt.

13. Rotorblatt nach einem der vorstehenden Ansprüche, **dadurch gekennzeichnet, dass** die Masse des Fliehkraftkörpers (405) zwischen 1 kg und 25 kg beträgt, und/oder der Klappenantrieb (401) zusätzlich ein Dämpfungselement (414) aufweist.

14. Windenergieanlage mit einem Rotor mit einem oder mehreren Rotorblättern nach einem der Ansprüche 1 bis 13.

**Claims**

1. A rotor blade for a wind turbine (100) having an aerodynamic profile which extends from a blade root (201) up to a blade tip (202) and has a leading edge (203) and a trailing edge (204), wherein an adjustable aerodynamic flap (211, 211a-211d) is arranged on the rotor blade, and wherein the flap can be adjusted between a retracted and a deployed position by means of a flap drive (401), wherein the flap drive (401) comprises a passive control system which controls flap position depending on rotation speed,

wherein the flap drive (401) has, as a drive source to generate force, a centrifugal body (405) and a compression spring as an elastic element (408) which provides an elastic force that exceeds the centrifugal force generated by the centrifugal body (405) up to a predetermined rotation speed of the rotor (106) on which the rotor blade (108) is arranged,

**characterized in that** the flap drive (401) is configured such that, when the rotor of the wind turbine is not rotating, the spring force of the elastic element (408) is so large that the flap (211) assumes a fully deployed position and only when a threshold rotation speed ($n_{gr}$) of about 4 revolutions/min is exceeded, the centrifugal force generated by the centrifugal body (405) exceeds the spring force, so that the flap drive gradually moves the flap (211) from the deployed position to the retracted position.

2. The rotor blade as claimed in claim 1, **characterized in that** the flap drive is made from an electrically non-conductive plastic.

3. The rotor blade as claimed in any of the preceding claims, **characterized in that** the flap drive (401) comprises a gear mechanism.

4. The rotor blade as claimed in any of the preceding claims, **characterized in that** the rotor blade has a locking mechanism (416) which is able to lock the adjustable flap (211, 211a-211d), wherein the flap can be locked preferably in the retracted position.

5. The rotor blade as claimed in any of the preceding claims, **characterized in that** the aerodynamic flap is formed as a trailing edge flap (211a-211d).

6. The rotor blade as claimed in any of the preceding claims, **characterized in that** the aerodynamic flap can be adjusted from its starting position only towards the pressure side of the aerodynamic profile, preferably in an angular range of 0-15°.

7. The rotor blade as claimed in any of the preceding claims, **characterized in that** the one aerodynamic flap is produced in a design selected from a group of flap types consisting of a split flap, a camber flap, a slotted flap, a Fowler flap and a throughflow flap.

8. The rotor blade as claimed in any of the preceding claims, **characterized in that** several flaps (211a-211d) are provided on the rotor blade, preferably three to five aerodynamic flaps, which can be adjusted independently of each other.

9. The rotor blade as claimed in claims 8 and 9, **characterized in that** different flap types are arranged on the rotor blade (108) simultaneously.

10. The rotor blade as claimed in any of the preceding claims, **characterized in that** the one aerodynamic flap is arranged in a region of the rotor blade where the thickness of the rotor blade is between 50% and 19% of the maximum profile thickness and/or the length of the aerodynamic flap in the direction of a rotor blade longitudinal axis is between 0.5 and 5 m.

11. The rotor blade as claimed in any of the preceding claims, **characterized in that** aerodynamic flap is arranged in a region close to the hub which extends from a blade root (201) up to half the total length of the rotor blade, and /or the depth of the aerodynamic flap is approximately between 5 - 25 % of the profile depth of the aerodynamic profile of the rotor blade (108) in the region in which the aerodynamic flap is arranged.

12. The rotor blade as claimed in any of the preceding claims, **characterized in that** a flap angle ($\alpha$) between the retracted and the maximally deployed flap position is no more than 20° or that a flap angle ($\alpha$), in the inner region (207) of the rotor blade close to the hub, between the retracted and the maximally deployed flap position is up to 90°.

13. The rotor blade as claimed in any of the preceding claims, **characterized in that** the mass of the centrifugal body (405) is between 1 kg and 25 kg and/or the rotor blade drive (401) also comprises a damping element (414).

14. A wind turbine with a rotor with one or more rotor blades according to any one of claims 1 to 13.

**Revendications**

1. Pale de rotor pour une éolienne (100) avec un profil aérodynamique, qui s'étend depuis une racine de pale (201) jusqu'à une pointe de pale (202) et qui présente un bord d'attaque (203) et un bord de fuite (204), dans laquelle un volet (211, 211a - 211d) aérodynamique ajustable est disposé sur la pale de rotor, et dans laquelle le volet peut être ajusté avec un entraînement de volet (401) entre une position rentrée et une position sortie, dans laquelle l'entraînement de volet (401) comprend une régulation passive, qui régule une position du volet dépendant de la vitesse de rotation, dans laquelle l'entraînement de volet (401) présente, en tant que source d'entraînement générant une force, un corps centrifuge (405) et un ressort de pression en tant qu'un élément élastique (408), qui fournit une force élastique, laquelle dépasse la force centrifuge générée par le corps centrifuge (405) jusqu'à une vitesse de rotation prédéfinie d'un rotor (106), sur lequel la pale de rotor (108) est disposée, **caractérisée en ce que** l'entraînement de volet (401) est configuré de telle sorte que, lorsque le rotor de l'éolienne ne tourne pas, la force de ressort du ressort de pression (408) est si grande que le volet (211) adopte une position totalement sortie et, seulement en cas de dépassement d'une vitesse de rotation limite ($n_{gr}$) d'environ 4 tours/min, la force centrifuge générée par le corps centrifuge (405) dépasse la force de ressort si bien que l'entraînement de volet ajuste le volet (211) peu à peu depuis la position sortie dans la position rentrée.

2. Pale de rotor selon la revendication 1, **caractérisée en ce que** l'entraînement de volet est fabriqué à partir d'une matière plastique non conductrice électriquement.

3. Pale de rotor selon l'une quelconque des revendications précédentes, **caractérisée en ce que** l'entraînement de volet (401) comprend une transmission.

4. Pale de rotor selon l'une quelconque des revendications précédentes, **caractérisée en ce que** la pale de rotor présente un verrouillage (416), avec lequel le volet (211, 211a - 211d) ajustable peut être bloqué, dans laquelle le volet peut être bloqué de préférence dans la position rentrée.

5. Pale de rotor selon l'une quelconque des revendications précédentes, **caractérisée en ce que** le volet aérodynamique est réalisé en tant que volet de bord de fuite (211a - 211d).

6. Pale de rotor selon l'une quelconque des revendications précédentes, **caractérisée en ce que** le volet aérodynamique peut être ajusté depuis sa position de sortie seulement vers le côté d'aspiration du profil aérodynamique, de préférence dans une plage angulaire de 0 - 15°.

7. Pale de rotor selon l'une quelconque des revendications précédentes, **caractérisée en ce que** le volet aérodynamique est réalisé concrètement dans une forme de construction qui est choisie parmi un groupe de types de volet constitué de : volet d'écartement, volet de courbure, volet de fente, volet à Fowler et volet d'écoulement traversant.

8. Pale de rotor selon l'une quelconque des revendications précédentes, **caractérisée en ce que** plusieurs volets (211a - 211d) sont prévus sur la pale de rotor, à savoir de préférence trois à cinq volets aérodynamiques, qui peuvent être ajustés indépendamment les uns des autres.

9. Pale de rotor selon la revendication 7 et 8, **caractérisée en ce que** différents types de volet sont disposés simultanément sur la pale de rotor (108).

10. Pale de rotor selon l'une quelconque des revendications précédentes, **caractérisée en ce que** le volet aérodynamique est disposé dans une zone, sur la pale de rotor, où l'épaisseur de la pale de rotor est comprise entre 50 % et 19 % de l'épaisseur de profil maximale et/ou la longueur du volet aérodynamique en direction d'un axe longitudinal de pale de rotor est comprise entre 0,5 et 5 m.

11. Pale de rotor selon l'une quelconque des revendications précédentes, **caractérisée en ce que** le volet aérodynamique est disposé dans une zone proche du moyeu, qui s'étend depuis une racine de pale (201) jusqu'à la moitié d'une longueur totale de la pale de rotor et/ou la profondeur du volet aérodynamique est comprise entre 5 - 25 % de la profondeur de profil du profil aérodynamique de la pale de rotor (108) dans une zone où le volet aérodynamique est disposé.

12. Pale de rotor selon l'une quelconque des revendications précédentes, **caractérisée en ce qu'**un angle de volet ($\alpha$) entre la position de volet rentrée et la position de volet sortie au maximum n'est pas supérieur à 20°, ou qu'un angle

de volet ($\alpha$) va jusqu'à 90° dans une zone intérieure (207) proche du moyeu de la pale de rotor, qui s'étend depuis une racine de pale (201) jusqu'à la moitié d'une longueur totale de la pale de rotor, entre la position de pale rentrée et la position de pale sortie au maximum.

13. Pale de rotor selon l'une quelconque des revendications précédentes, **caractérisée en ce que** le poids du corps centrifuge (405) est compris entre 1 kg et 25 kg, et/ou l'entraînement de volet (401) présente en supplément un élément d'amortissement (414).

14. Eolienne avec un rotor avec une ou plusieurs pales de rotor selon l'une quelconque des revendications 1 à 13.

Fig. 1

Fig. 2

Fig. 3

Fig. 4

Fig. 5A

Fig. 5B

Fig. 6

Fig.7A

Fig.7B

Fig.8A

Fig.8B

Fig. 9

Legend:
- ·········· Polare mit Klappe, P_el [kW]
- ——— Referenz, P_el [kW]
- —·—·— Polare mit Klappe, cp_Anlage [-]
- — — — Referenz, cp_Anlage [-]

Fig. 10

Fig. 11

Fig. 12

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140356181 A1
- DE 10348060 A1
- DE 102015017127 A1
- DE 102012109171 A1
- DE 10155014 A1
- DE 2908761 A1
- EP 2634419 A1
- FR 2863320 A1
- US 5456579 A
- US 5570859 A